# EUROPÄISCHE PATENTANMELDUNG

(11) **EP 4 039 106 A1**
(43) Veröffentlichungstag der Anmeldung: **10.08.2022**
(21) Anmeldenummer: 21020061.4
(22) Anmeldetag: 06.02.2021
(51) Int. Cl.: A23L 17/30, A23L 17/10, A23L 5/10

(54) **HERSTELLUNG VON KAVIARPULVER AUS FISCHROGGEN**

(71) Anmelder: Subkov, Oleg, 68163 Mannheim (DE)
(72) Erfinder: Subkov, Oleg, 68163 Mannheim (DE)

(57) **Zusammenfassung**

Die vorliegende Erfindung beschreibt die Herstellung eines trockenen Pulvers aus Kaviar unterschiedlicher Fischarten. Das Luftaustrocknen mit Infrarotbestrahlung und optionaler Zwangsluftumwälzung von nicht enthäuteter und ungesalzener oder sehr wenig gesalzener Rohkaviar und der anschließenden Zerkleinerung in Teile kleiner als 3mm, hat als Ergebnis eine pulverartige Substanz, die ein neues Produkt in Gastronomie darstellt. Kaviarpulver kann im Vergleich zu anderen Kaviarprodukten ohne Salz produziert werden. So bleibt der natürliche Geschmack bewahrt und kann als Zutat für Gerichte und Lebensmittelprodukte verwendet werden. Auf diese Art und Weise lässt sich der Geschmack von Kaviar in der Gastronomie beliebig einsetzen, was vorher gar nicht möglich oder schwer realisierbar war.

Zugegeben wird das Kaviarpulver zu Produkten, die genügend Fett und/oder Wasseranteile beinhalten. Nach der Zugabe quellt das Kaviarpulver auf und ändert dabei den Geschmack des Produktes und unter Umständen auch die Farbe. Damit können unter anderem Saucen und Teig verfeinert und Kaviarbutter oder Kaviarkäse produziert werden. Außerdem kann das Kaviarpulver auch als Gewürz bei heißen Speisen, Salaten etc. verwendet werden.

## Beschreibung

### Technisches Gebiet, auf das sich die Erfindung bezieht

Die vorliegende Erfindung beschreibt ein Verfahren zur Herstellung eines trockenen Kaviarpulvers aus nicht enthäuten Rohkaviars.

### Einschlägiger Stand der Technik

Die Herstellung von Kaviarpulver als eigenständiges Produkt ist zum aktuellen Zeitpunkt nicht bekannt. Verwandte Erzeugnisse sind gesalzene, auch zusammengepresste Kaviarstücke wie "Bottarga", die geräuchert und gesalzen am Stück produziert werden. Diese sind sehr geschmackspezifisch sind und können lediglich eingeschränkt als Zutat in kulinarischen Erzeugnissen verwendet werden.

### Zu lösende technische Aufgabe

Die Aufgabe besteht darin, ein Verfahren zur Herstellung eines trockenen Pulvers aus Kaviar herzuleiten. Das resultierende Kaviarpulver soll als Zutat oder Gewürz zur Zugabe in unterschiedliche Speisen und Lebensmitteln verwendet werden können. Hier bei soll der natürliche Geschmack vom echten Kaviar bewahrt werden.

### Offenbarung der Erfindung

Die Aufgabe der Erfindung wird gelöst, in dem eine trockene pulvermäßige Substanz aus naturell entnommenen Kaviarstücke (auch nicht enthäute) entsteht, die technischer Aufgabe entspricht.

### Beschreibung zur Ausführung der Erfindung

Im ersten Schritt werden die Kaviarstücke roh im Wasser gewaschen und ohne Salz oder leicht gesalzen am Stück in einem Infrarot-Trockner (Infrarot-Dörrgerät) bei Temperaturen zwischen 25 und 70 Grad Celsius für 7 bis 20 Stunden getrocknet. Temperatur und Trockendauer sind abhängig vom Feuchtigkeitsgrad, Ladungsvolumen und Infrarotstrahlungsstärke. Das Zielprodukt soll hierbei eine Restfeuchtigkeit von 10% bis 20% beinhaltet und sich leicht zerkleinern lassen. Die Infrarotbestrahlung dient zur Sterilisation des Produktes und zur besseren Entwässerung. So bleiben im Vergleich zur maschinell oder einfachen Lufttrocknung in der Sonne mehr Nährstoffe bewahrt. Im letzten Schritt werden die getrockneten Kaviarstücke in einer Raspel oder Mühle zerkleinert, durch ein Sieb oder mehrere Siebe maschinell oder manuell sortiert und danach einfach oder im Vakuumverfahren verpackt.

## Patentansprüche

1. Verfahren zur Herstellung eines Kaviarpulvers durch Austrocknung von rohen oder leicht gesalzenen, nicht enthäuteten Kaviarstücken, mittels Infrarotstrahlung kombiniert mit Luftströmung bzw. Luftableitung und anschließender Zerkleinerung.

2. Verfahren nach Anspruch 1. ist **dadurch gekennzeichnet, dass** die rohen und wassergewaschenen Kaviarstücke naturbelassen bleiben oder in einer Salzwasserlösung mit max. 30 g. nicht jodiertem Salz auf 1 Liter Wasser (18 bis 25 Grad Celsius) für 1-2 Minuten eingelegt werden.

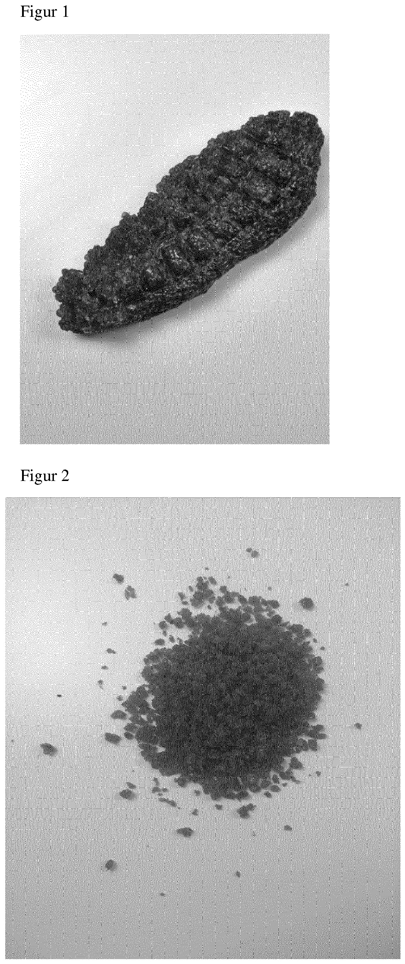

3. Verfahren nach Anspruch 2. Ist **dadurch gekennzeichnet, dass** die Kaviarstücke in einem Infrarot Dörrgerät / Trocknungsschrank möglichst flach und mit genügend Abstand zueinander zwischen 7 und 20 Stunden getrocknet werden. Hierbei werden die Kaviarstücke leicht zerbrechlich. Die Austrocknungszeit hängt von folgenden Faktoren ab: Feuchtigkeitsgrad der Kaviarstücke, Kapazitäts- und Ladungsvolumen des Dörrgerätes, der Gesamtladung und der Infrarotstrahlungsstärke des Dörrgerätes in Kombination mit Stärker der Luftableitung. Bespielergebnis: Figur 1: Kaviarstück vom Silberlachs nach Trocknung (ca. 12 Stunden).

4. Verfahren nach Anspruch 3. ist **dadurch gekennzeichnet, dass** die ausgetrockneten Kaviarstücke maschinell oder manuell geraspelt oder in einer Mühle zerkleinert werden. So entstehen Teilchen von getrocknetem Kaviar, die kleiner als 3mm sind und als Kaviarpulver identifizierbar sind. Bespielergebnis: Figur 2: Geraspelter Kaviarstück - Kaviarpulver aus Silberlachskaviar.
